(19) Europäisches Patentamt
European Patent Office
Office européen des brevets

(11) Numéro de publication : **0 414 600 B1**

(12) # FASCICULE DE BREVET EUROPEEN

(45) Date de publication du fascicule du brevet : **03.11.93 Bulletin 93/44**

(51) Int. Cl.$^5$ : **A01N 37/04,** A01N 37/06, A01N 37/32, A01N 35/06

(21) Numéro de dépôt : **90402315.7**

(22) Date de dépôt : **20.08.90**

(54) **Produits nématicides.**

Le dossier contient des informations techniques présentées postérieurement au dépôt de la demande et ne figurant pas dans le présent fascicule.

(30) Priorité : **24.08.89 FR 8911212**

(43) Date de publication de la demande : **27.02.91 Bulletin 91/09**

(45) Mention de la délivrance du brevet : **03.11.93 Bulletin 93/44**

(84) Etats contractants désignés : **AT BE CH DE DK ES FR GB GR IT LI LU NL SE**

(56) Documents cités :
**GB-A- 1 026 442**
**US-A- 2 852 426**
**US-A- 3 328 241**
**US-A- 3 465 037**
**US-A- 4 677 119**
**AGRIC. BIOL. CHEM., vol. 46, no. 1, 1982, pages 167-172, Agricultural Chemical Society of Japan, JP; A. NAGASE et al.: "Nematicidal activity of akylamine against the pine wood nematode, Bursaphelenchus lignicolus"**
**AGRIC. BIOL. CHEM., vol. 45, no. 1, 1981, pages 249-251, Agricultural Chemical Society of Japan, JP; Y. KIMURA et al.: "A rapid and simple method for assay of nematicidal activity and its application to measuring the activities of dicarboxylic esters"**
**CHEMICAL ABSTRACTS, vol. 110, no. 25, 19 juin 1989, page 225, résumé no. 227129n, Columbus, Ohio, US; P.E. BUTTERWORTH et al.: "The effects of specific metabolic inhibitors on the energy metabolism of Globodera rostochiensis and Panagrellus redivivus", & REV. NEMATOL. 1989, 12(1), 63-7**
**CENTRAL PATENTS INDEX, BASIC ABSTRACTS JOURNAL, SECTION C: AGDOC, 23 avril 1980, résumé no. 15363C/09, Derwent Publications Ltd, Londres, GB; & JP-A-55 07 220 (KAO SOAP K.K.) 19-01-1980**

(56) Documents cités :
**Rev. Nemat. 12(1), 63-67 (1989)**
**J. Am. Chem. Soc. 111(2), 464-470 (1989)**

(73) Titulaire : **INSTITUT NATIONAL DE LA RECHERCHE AGRONOMIQUE (INRA)**
**147, rue de l'Université**
**F-75341 Paris Cédéx 07 (FR)**

(72) Inventeur : **Djian, Caroline**
**Le Neptunia, Avenue de L'Esterel**
**F-06600 Juan-Les-Pins (FR)**
Inventeur : **Cayrol, Jean-Claude**
**Bois Fleuri**
**F-06410 Biot (FR)**
Inventeur : **Ponchet, Michel**
**Les Primevères, Bd Guillaume Apollinaire**
**Les Samboules, F-06600 Antibes (FR)**

(74) Mandataire : **Ores, Irène et al**
**CABINET ORES 6, Avenue de Messine**
**F-75008 Paris (FR)**

EP 0 414 600 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention est relative à des compositions nématicides.

Comme on le sait, les nématodes phytophages sont de petits vers microscopiques qui envahissent par millions les tissus végétaux et détruisent les cellules (feuilles, tiges et racines).

Les dommages qu'ils provoquent aux Etats-Unis sur les cultures vivrières représentent annuellement 6 milliards de dollars.

En Europe ils sont responsables, en cultures céréalières, de dégâts atteignant 10% de la production.

Dans le bassin méditerranéen, ils occasionnent des diminutions de récoltes de 20 à 30% dans les vergers d'agrumes.

En Amérique Latine, les estimations actuelles du C.I.R.A.D. indiquent que 50% des cocotiers sont détruits par le nématode *Radinaphelenchus cocophilus*.

En Afrique, et plus particulièrement en Cote d'Ivoire, le *Pratylenchus brachyurus* constitue un des principaux ennemis des plantations d'ananas et le *Radopholus similis* est le principal responsable de la destruction des bananiers.

Les nématodes appartenant au genre *Meloidogyne* sont répandus dans le monde entier et sont à l'origine de dégats très graves dans les régions chaudes du globe. Au Brésil, par exemple ils détruisent les plantations de caféiers et il est indispensable de pratiquer de longues jachères ou de mettre constamment en culture des terres neuves (déforestation) pour pouvoir maintenir cette culture. En Afrique, aucune production n'est à l'abri de leurs attaques et des traitements sont indispensables pour protéger toutes les cultures.

Les nématodes représentent donc un problème important à l'échelle mondiale. Ils ont été longtemps méconnus en raison de leur taille extrêmement réduite qui les rend absolument invisibles à l'oeil nu et on a très souvent couvert l'ignorance de leur présence par le terme général de "fatigue des sols".

Des moyens de lutte contre les nématodes ont été proposés. Ces moyens sont de deux ordres :

- désinfection préventive des sols contaminés, avant leur remise en culture,
- traitements curatifs possibles sur un nombre très limité de productions végétales avec des produits extrêmement toxiques.

La désinfection des sols recourt à des produits fumigants le plus souvent dérivés des gaz de combat (guerre chimique). Les plus connus et les plus utilisés sont :

- le bromure de méthyle, produit très actif mais très toxique ; les dangers d'emploi sont d 'autant plus elevés que son action ne se manifeste que plusieurs heures après l'inhalation des vapeurs. Lorsque l'issue n'est pas fatale, elle laisse des séquelles graves qui persistent plusieurs mois ou plusieurs années.
- la chloropicrine, gaz lacrymogène très dangereux pour les vertébrés.
- le 1,2 -dichloroprane 1,3-dichloropropène, produit le plus utilisé contre les nématodes et connu des agriculteurs sous le nom de D.D.. Il est actuellement interdit aux Etats-Unis.
- le dibromométhane dont l'emploi exige des précautions particulières en raison de la phytotoxicité des résidus de brome qui subsistent dans le sol longtemps après les traitements. Il est à proscrire sur les plantes sensibles au brome (plants à bulbes et oeillets par exemple).
- Le Brevet US 3 465 037 propose également l'utilisation d'un dérivé bromé, l'acide 2,3-dibromosuccinique, comme nématicide et fongicide.

Ces produits présentent tous de sérieux inconvénients :

- non spécifiques, ils atteignent l'ensemble de la microflore et de la microfaune : ils bouleversent l'équilibre biologique et empêchent les processus de biodégradation de la matière organique, conduisant ainsi à des sols battants entraînés par les pluies. Cette destruction de la couche arable est particulièrement sensible en zones tropicales où règnent des pluies torrentielles.
- ils polluent l'environnement et les denrées alimentaires : les résidus toxiques des traitements passent dans la nappe phréatique et dans les tissus végétaux. C'est ainsi qu'après un traitement au bromure de méthyle, on retrouve 6476 ppm de brome dans l'épiderme des pommes de terre et 5660 ppm dans les fanes de carotte. De même, des quantités non négligeables de brome se retrouvent dans les feuilles de laitues [SCOTTO LA MASSESE et MARS, 1975].
- les résultats sont insuffisants : les gaz employés ne pénètrent pas dans le sol à plus de 25 à 30 cm. On estime que 70% des nématodes phytophages se trouvent dans cette zone et sont donc tués lors du traitement. Mais les 30% situés plus profondément échappent aux nématicides et ont tôt fait de recoloniser la couche superficielle (d'autant plus aisément que tous les antagonistes naturels y ont disparu) et d'attaquer les cultures. Il est donc nécessaire de répéter les traitements continuellement, ce qui non seulement accroît le coût des cultures mais accroît aussi les pollutions.

Pour réaliser des traitements curatifs, un certains nombre de nématicides à action systémique peuvent être employés sur les cultures. Ce sont d'une part des carbamates et d'autre part des organo-phosphates.

Au nombre des carbamates, il faut citer l'oxamyl, l'aldicarbe et le carbofuran dont les formules chimiques sont très voisines de celle de l'acétylcholine et qui agissent par inhibition de l'acétylcholinestérase.

- les organo-phosphates utilisés comme nématicides sont l'éthoprophos, le fensulfothion et le fenamiphos. Ils sont également inhibiteurs de l'acétylcholinestérase.

Ces produits sont extrêmement dangereux car ils passent dans la sève des végétaux et leur toxicité est très grande : la $DL_{50}$ de l'aldicarbe est de 930 mg par kg ; des rats exposés à une poussière d'aldicarbe de 200 mg par $m^3$ sont tués en 5 minutes.

L'emploi de ces produits est donc soumis à une législation très stricte : l'aldicarbe n'est autorisé que sur cultures florales et ornementales ainsi qu'au moment des semis sur quelques cultures dont la récolte est tardive (céréales) ou transformée industriellement (betteraves à sucre).

Néanmoins, compte-tenu de la vente libre de ces produits, de nombreux incidents se produisent (intoxications collectives) et même des accidents très graves, puisque, comme on le sait, l'aldicarbe est à l'origine de la catastrophe de Bhopal en Inde.

Devant ces problèmes, de nombreux pays ont interdit l'emploi des nématicides (la Suisse notamment) et la pression écologiste qui conduit les Etats à se préoccuper de l'environnement laisse à penser que ces modes de traitement seront proscrits à plus ou moins brève échéance par la plupart des Etats.

Pour les raisons qui viennent d'être exposées, la recherche de nématicides s'est orientée vers l'obtention de nématicides d'origine végétale.

Le pouvoir pathogène de champignons telluriques sur les kystes et oeufs de nématodes phytoparasites est connu depuis plus de 50 ans [KORAB, 1929, RADEMACHER et SCHMIDT, 1933, JATALA et al., 1979] ; des études plus récentes [SAKHUJA et al., 1978, MANI et SETHI, 1984] ont révélé la production, par plusieurs de ces champignons (*Fusarium oxysporum* SCHECT, *Fusarium equiseti* (CORDA) SACC, *Rhizoctonia solanii* KUHN...), de substances toxiques dans leur milieu de croissance.

En phytopathologie, on désigne par toxine des substances non enzymatiques de faible poids moléculaire produites par des micro-organismes et nocives à faible concentration. La présence d'une ou plusieurs de ces substances toxiques a été décelée par Régina DECHECHI GOMES (1986) dans le filtrat de culture de *Paecilomyces lilacinus* (THOM) SAMSON après avoir observé que les oeufs de *Meloidogyne arenaria* parasités par le champignon présentaient des déformations embryonnaires même lorsqu'ils n'étaient pas envahis par le mycélium.

Par ailleurs, les effets antibiotiques et fongicides des filtrats de culture de *Paecilomyces* ont été signalés par ANSLOW et al. (1943), BILAI et al. (1964), BIRKINSHAW et al. (1936), BRIAN et al. (1946) et BRIAN et HEMMING (1947) ; enfin l'extraction de 3 antibiotiques, la lilacinine, la leucostatine et la beauvericine, a été réalisée par YAMANO (1971), ARAI et al. (1973) et BERNARDINI & al. (1975).

De même que DECHECHI GOMES a montré que le filtrat de culture de *Paecilomyces lilacinus* est toxique vis-à-vis des oeufs et des larves de *Meloidogyne*, MANI [THESE DE DOCTORAT, 1983, INDIAN AGRICULT. RESEARCH INSTITUTE, NEW DELHI, INDIA], puis MANI & SETHI [NEMATOTROPICA, (1984) 14, 2 pages 121-129] avaient montré auparavant que les filtrats de culture de *Fusarium oxysporumn f. sp. ciceri* et de *F. solani* présentent des propriétés nématicides, tout comme SAKHUJA, SINGH et SHARMA [INDIAN PHYTOPATH., (1978), 31 pages 376-377] avaient observé dès 1978 les propriétés nématicides du milieu de croissance d'*Aspergillus niger*.

Pour permettre une utilisation industrielle des observations des différentes Equipes de Chercheurs, il n'était pas envisageable d'utiliser en tant que nématicides des filtrats de culture de champignons appropriés, en raison de la complexité et de la durée des opérations de culture de ces champignons et de purification des filtrats de culture obtenus.

C'est pourquoi les Inventeurs se sont fixé pour but dans un premier temps de détecter parmi les champignons, ceux d'entre eux dont les filtrats de culture présentent des propriétés toxiques vis-à-vis des larves de nématodes, puis dans un second temps d'identifier dans ces filtrats les substances présentant des propriétés toxiques spécifiques vis-à-vis des nématodes, et, dans un troisième temps de définir les caractéristiques communes à ces substances toxiques, et, enfin, de synthétiser des composés nématicides répondant aux critères définis, pour mettre à la disposition du monde agricole, des produits aisément synthétisables à l'échelle industrielle, dans des conditions économiquement rentables.

La présente invention s'est en conséquence donné pour but de pourvoir à des produits nématicides aptes à exercer une action spécifique sur les espèces de nématodes nuisibles à l'égard des cultures vivrières et analogues, sans porter atteinte à la flore et à la faune environnantes.

Des travaux antérieurs ont montré [JOHNSTON, NATURE, 16 mai 1959, vol. 183, par. 1392] que les acides gras métaboliques produits par *Clostridium butyricum* Prazmowski étaient aptes à inactiver un nématode qui s'attaque aux plantules du riz, le *Tylenchorhynchus martini* ; les acides gras métaboliques produits par *Clostridum butyricum* sont les acides butyrique, propionique, acétique et formique. Selon les travaux rapportés par

JOHNSTON, un mélange des acides butyrique et propionique est plus actif à des concentrations en solution de $10^{-3}$ et $10^{-4}$ M/litre que les acides butyrique et propionique testés isolément ; l'activité relative des acides individuels serait fonction de leurs poids moléculaires et décroîtrait dans l'ordre suivant : acides butyrique, propionique, acétique et formique et l'activité des mélanges d'acides étant également fonction de leurs poids moléculaires combinés, les mélanges d'acides butyrique et propionique seraient plus actifs que les mélanges d'acides propionique et acétique. Les tests réalisés par JOHNSTON l'avaient été à un pH compris entre 3,3 et 4,4.

Un article de HOLLIS et al. paru dans PHYTOPATHOLOGY, (1966), vol. 56, pages 1015-1019, démontrait que bien que l'acide acétique soit l'acide prédominant dans les sols sur lesquels était cultivé du riz, qui contenaient du *Clostridium butyricum* Prazmowski, néanmoins, cet acide n'avait aucune activité nématicide in situ dans des champs de riz et seuls les acides butyrique et propionique (autres produits du métabolisme de *Clostridium butyricum* étaient toxiques à l'égard des nématodes. HOLLIS et al. démontraient également que l'activité nématicide des acides butyrique et propionique n'était pas à attribuer uniquement au pH - puisque l'acide acétique n'était pas actif - mais à la valeur du pKa, la toxicité des acides butyrique et propionique vis-à-vis des nématodes étant lié à la proportion élevée de ces acides à l'état non dissocié aux bas pH.

BUTTERWORTH et al., [Revue Nematol. 12, 63-67 (1989)] indiquent que l'acide itaconique est un inhibiteur métabolique pour les nématodes *Globodera rostochiensis* et *Panagrellus redivivus*.

D'autres travaux [LUC, NOMATOLOGICA (1961), 6, pages 95-106] ont montré que les racines de millet produisent un facteur qui inhibe la migration du nématode *Hemicycliophora paradoxa*, mais qui n'avait pas pu être identifié. Des travaux ultérieurs [HUSAIN et al. INDIAN J. NEMATOL, (1973), 3, pages 134-137] ont montré une relation linéaire entre les concentrations en produits chimiques organiques testés pour établir leur activité nématicide à l'égard de *Helicotylenchus sp.* in vitro et le pourcentage de mortalité : une mortalité de 100% a été obtenue avec le formaldéhyde, l'ammoniaque et la diastase à pratiquemment toutes les concentrations testées, au bout de 12 heures, alors que ce taux de mortalité n'a été obtenu au bout du même temps avec les acides acétique, oxalique, salicylique et l'iodohydroxyquinoléine, qu'avec une concentration de 2M/litre. Avec le propanol et l'acétone, le taux de mortalité n'était que de 33 à 40% au bout de 12 heures, mais atteignait 100% si le contact entre les nématodes et le produit chimique, testé était prolongé jusqu'à 48 heures. Ceci signifie qu'à des degrés divers, des composés chimiques très différents les uns des autres sont doues d'activité nématicide, à ceci près, cependant, qu'un composé inorganique tel que l'ammoniaque ($NH_4OH$), un aldéhyde tel que le formaldéhyde (HCHO) et une diastase sont considérés comme les plus toxiques à toutes les concentrations testées (0,1M, 0,01M et 0,001M/litre) , alors que, dans l'ordre, un monoacide cyclique, comme l'acide salicyclique ($C_6H_5OHCOOH$) un diacide linéaire tel que l'acide succinique ($HOOC-CH_2-CH_2-COOH$), des monoacides de bas poids moléculaire tels que l'acide propionique ($CH_3-CH_2-COOH$) et l'acide acétique ($CH_3-COOH$), un diacide tel que l'acide oxalique (HOOC-COOH) et l'iodohydroxyquinoléine sont considérés comme aussi toxiques que les trois premiers composés si leur concentration est portée à 2M/litre, et tandis que l'isopropanol, l'acétone et le méthanol sont les moins toxiques, puisqu'une mortalité de 100% n'est atteinte qu'en quadruplant le temps de contact.

Le brevet US 2 852 426 décrit l'utilisation d'acides carboxyliques et de leurs esters comme nématicides.

KIMURA et al. [AGRIC. BIOL. CHEM., (1981),45 (1), pages 249-251] ont mis en évidence l'activité nématicide d'esters dicarboxyliques, en particulier à l'égard d'un nématode qui s'attaque aux racines, *Pratylenchus coffeae.* L'Article cité montre que :

- sur 12 di-n-alkyl-succinates, seuls le di-n-propyl-succinate, le di-n-butyl-succinate et le di-n-amyl-succinate présentent des propriétés nématicides marquées, tandis que cinq autres di-n-alkyl-succinates sont totalement inactifs : il s'agit du diallylsuccinate, du diméthylsuccinate, du diéthylsuccinate, du di-n-décylsuccinate et du di-n-dodécylsuccinate. Les quatre succinates suivants se sont avérés faiblement actifs : le di-n-hexyl-succinate, le di-n-heptyl-succinaate, le di-n-octylsuccinate et le di-n-nonyl-succinate ;
- les esters obtenus par réaction de l'acide succinique avec des alcools ramifiés isomères des fractions n-alcools des succinates les plus actifs, ne sont que faiblement actifs ;
- les acides dicarboxyliques sont faiblement actifs, l'acide oxalique étant totalement inactif à l'égard du nématode visé ;
- les n-dibutylesters de ces acides dicarboxy- liques présentent des activités nématicides considérables, sans mesure de comparaison avec celles des acides dicarboxyliques dont ils sont issus ;

Ces résultats laissent à penser que la liaison ester entre les acides dicarboxyliques et les alcools normaux comprenant de 3 à 5 atomes de carbone joue un rôle important dans l'apparition de propriétés nématicides significatives.

Par ailleurs, les dialkylesters d'acides dicarboxyliques étudiés dans cet Article ne paraissent pas utilisables dans la pratique dans la mesure où ils sont difficilement ou pas solubles dans l'eau, puisque leur mise en solution est réalisée en ajoutant un détergent en solution (EPAN-42O) à une solution méthanolique du composé testé, et dans la mesure également où, dans les meilleurs cas, une mortalité voisine de 100% n'a pu être atteinte qu'après 48 à 96 heures de contact et en utilisant, de surcroît, des concentrations de composé testé de l'ordre de 300 ppm sans pour autant obtenir une mortalité de 100% (sauf en ce qui concerne le di-n-butyl-glutarate).

NAGASE et Al. [AGRIC. BIOL. CHEM., 46, N°1 (1982) p.167-172] ont étudié l'activité nématicide d'alkylamines contre le nématode du pin, à savoir Bursaphelenchus lignicolus, comparée aux propriétés nématicides d'acides, notamment d'acides gras et d'acides dicarboxyliques. Il ressort de leur étude que les monoacides aliphatiques ont une activité supérieure à celle des diacides sur ce nématode parasite de la sève du pin, des diacides tels que l'acide oxalique, l'acide malonique, l'acide succinique et l'acide maléique ne présentant, en fait, qu'une activité nématicide très faible, même à des doses très importantes, incompatibles avec la conservation de l'équilibre biologique de l'environnement des plantes traitées.

Les Inventeurs se sont en conséquence donné pour but de pourvoir à des nouveaux composés nématicides qui présentent une activité nématicide spécifique et sélective significative vis-à-vis des nématodes phytoparasites des racines des plantes et qui sont obtenus par synthèse dans de bonnes conditions de rentabilité économique, qui exercent leur action nématicide dans des délais considérablement plus brefs que les composés nématicides proposés dans l'Art antérieur, à des concentrations plus faibles que ces derniers, à des pKa plus élevés que ceux des composés proposés dans l'Art antérieur et quelles que soient les conditions de pH.

La présente Invention a pour objet l'utilisade dérivés de diacides carboxyliques caractérisés en ce qu'ils répondent à la formule générale I ci-après :

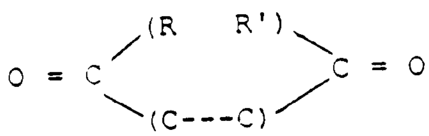

(I)

dans laquelle :

R et R' représentent chacun un groupe $OCH_3$
ou R représente un groupe OH et R' un groupe $OCH_3$
ou R représente un groupe OH et R' un groupe $OC_2H_5$
ou (R R') représente un groupe $CR_1R_2$
ou un groupe $NR_1$
ou un atome d'oxygène

$R_1$ et $R_2$, qui peuvent être identiques ou différents, représentent chacun un atome d'hydrogène ou un groupe méthyle

(C---C) représente un groupe $CR_1=CR_2$
ou un groupe $CR_1R_2-C=CR_1R_2$
ou un groupe $(CR_1R_2)n$ où
n = 0, 1, 2 ou 3

et où $R_1$ et $R_2$ ont la même signification que ci-dessus, comme nématicides spécifiques, sélectifs vis-à-vis des nématodes phytoparasites des racines des plantes.

Selon un mode de mise en oeuvre avantageux, on utilise des composés répondant à la formule la ci-après :

ROC - (C---C) - COR'

dans laquelle :

R et R' représentent chacun un groupe $OCH_3$
ou R représente un groupe OH et R' un groupe $OCH_3$
ou R représente un groupe OH et R' un groupe $OC_2H_5$
(C---C) $R_1$ et $R_2$ ont la même signification que ci-dessus :

Selon un autre mode de mise en oeuvre avantageux, on utilise des composés répondant à la formule Ib ci-après :

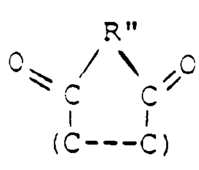

(Ib)

dans laquelle :

R" représente un groupe $CR_1R_2$ ou $NR_1$
ou un atome d'oxygène
(C---C) représente un groupe $CR_1=CR_2$
ou $CR_1R_2-C=CR_1R_2$
$R_1$ et $R_2$ ont la même signification que ci-dessus.

Il était donc tout-à-fait inattendu et surprenant qu'en dépit des enseignements de l'Art antérieur, des acides dicarboxyliques tels que l'acide maléique ou des diméthylesters d'acides dicarboxyliques tels que le diméthylsuccinate, puissent être doués d'une activité nématicide.

Selon un mode de réalisation avantageux des composés de formule Ib ci-dessus, les composés, dans lesquels R' représente un groupe $CR_1R_2$ où $R_1$ et $R_2$ sont des atomes d'hydrogène , sont des dicétones dont l'activité nématicide est particulièrement importante ; de même, les composés de formule Ib dans lesquels R' représente un atome d'oxygène, sont des anhydrides présentant une activité nématicide considérable, et les composés de formule Ib dans lesquels R' représente un groupe $NR_1$ dans lequel $R_1$ est un atome d'hydrogène, sont des imides dont l'activité nématicide est très significative.

Les Inventeurs sont parvenus à mettre en évidence que les composés nématicides qui répondent à la formule linéaire Ia, ne doivent pas comporter plus de 5 atomes de carbone (sans compter les radicaux R, R', $R_1$, $R_2$) sous peine de perdre leur activité spécifique à l'égard des nématodes parasites des racines des plantes.

L'invention sera mieux comprise à l'aide des exemples qui vont suivre qui sont donnés sous forme de tableaux.

Les anhydrides internes des diacides carboxyliques de formules HOOC-A-COOH, cis butènes-, cis-2,3 diméthylbutène- et méthylène butane-dioïques, mieux connus sous leurs noms d'acides maléique, 2,3-diméthylmaléique et itaconique, se sont révélés très intéressants à la fois pour leur activité supérieure à celle des acides et esters connus par l'Art antérieur, qui se manifeste à des pH plus élevés, et pour leur effet létal sur des larves immergées 15 minutes à 2 heures dans des solutions $10^{-2}$M/litre et moins de 10 heures dans des solutions plus diluées.

Le tableau 1 qui va suivre donne, à titre comparatif, les $DL_{100}$ exprimées en Moles par litre et mg de mantière active par litre ou (ppm) après 20 heures d'immersion de larves de *Meloidogyne sp.* ou d'*Heterodera sp.* dans des solutions de di-acides carboxyliques, compte tenu d'un témoin non traité.

TABLEAU 1

Activité des diacides testés de formule I
(Les doses létales sont données pour des larges de Meloidogyne ou d'Heterodera compte-tenu d'un témoin non traité mais ajusté au même pH)

| Composés de formule Ia | DL 100 en moles et en mg de matière active par litre |
|---|---|
| Acide maléique 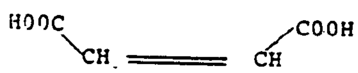 pKa = 1,97-6,24 | $7.10^{-5}$ M<br>8,12 ppm |
| Acide itaconique 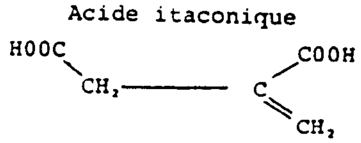 pKa = 3,82-5,55 | $30.10^{-5}$ M<br>39,03 ppm |
| Acide mésaconique 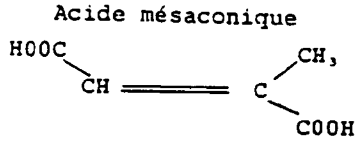 pKa = 4,9-7,18 | $125.10^{-5}$ M<br>162,62 ppm |
| Acide oxalique 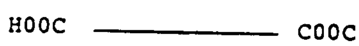 pKa = 1,3-4,3 | $125.10^{-5}$ M<br>115,06 ppm |
| Acide dibromo-maléique 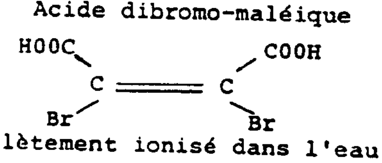 complètement ionisé dans l'eau | $125.10^{-5}$ M<br>342,34 ppm |
| Acide fumarique 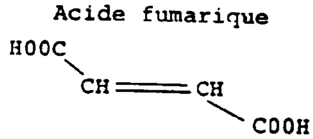 pKa = 3,0-4,4 | $250.10^{-5}$ M<br>294,25 ppm |
| Acide diméthyl malonique 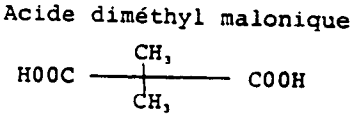 pKa = 3,1-6,2 | $250.10^{-5}$ M<br>330,27 ppm |

Les mêmes effets ont été observés avec les diméthylesters des acides précités, de formule :

$$CH_3OOC\text{-}A\text{-}COOCH_3,$$

dont l'activité nématicide est indépendante du pH des solutions ; ces effets sont réunis dans le Tableau 2 ci-après ; le Tableau 3 ci-après présente les effets observés pour les produits de formule Ib (dicétones, anhydrides et imides).

TABLEAU 2

Doses d'esters de diacides carboxyliques létales pour 100% des larves de Meloidogyne et d'Heterodera immergées 20 heures dans les solutions, compte-tenu d'un témoin non traité

| Composés de formule Ia | DL 100 en moles et en mg de matière active par litre |
|---|---|
| Méthyl maléate 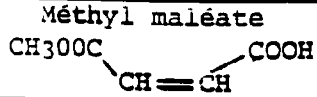 | $16.10^{-5}$ M<br>20,83 ppm |
| Ethyl maléate 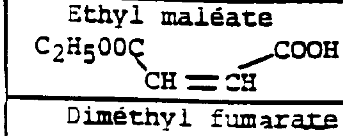 | $18.10^{-5}$ M<br>26,04 ppm |
| Diméthyl fumarate 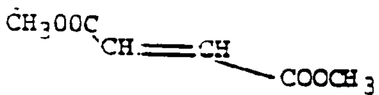 | $7.10^{-5}$ M<br>10,09 ppm |
| Diméthyl glutarate 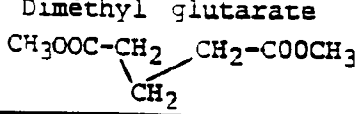 | $20.10^{-5}$ M<br>32,03 ppm |
| Diméthyl malonate 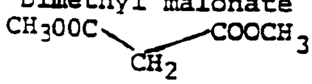 | $20.10^{-5}$ M<br>26,42 ppm |
| Diméthyl oxalate<br>$CH_3OOC-COOCH_3$ | $30.10^{5}$ M<br>35,40 ppm |
| Diméthyl succinate<br>$CH_3OOC-CH_2-CH_2-COOCH_3$ | $30.10^{-5}$ M<br>43,84 ppm |
| Diméthyl itaconate 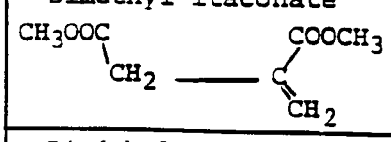 | $60.10^{-5}$ M<br>94,89 ppm |
| Diméthyl maléate 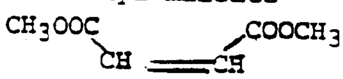 | $100.10^{-5}$ M<br>144,13 ppm |
| Diméthyl methyl succinate 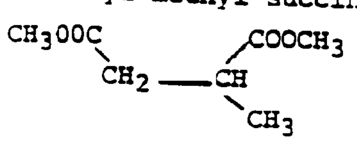 | $100.10^{-5}$ M<br>160,17 ppm |

TABLEAU 3

Doses létales des composés de formule Ib
dicétones, anhydrides et imides
pour 100% des larves de Meloidogyne et d'Heterodera
immergés 20 heures dans les solutions,
compte-tenu d'un témoin non traité

| Composés de formule Ib | DL 100 en moles et en mg de matière active par litre |
| --- | --- |
| Cyclopentene dione 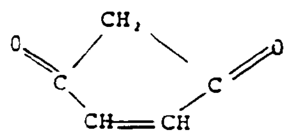 | $2,5.10^{-5}$ M<br>2,40 ppm |
| Anhydride maléique 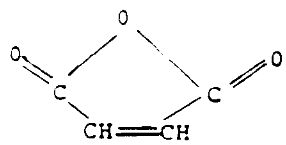 | $7.10^{-5}$ M<br>6,86 ppm |
| Maléimide 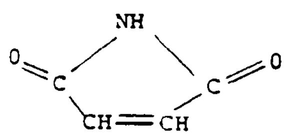 | $10.10^{-5}$ M<br>9,71 ppm |
| Anhydride 2,3-diméthyl maléique 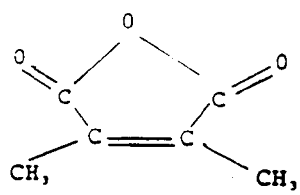 | $20.10^{-5}$ M<br>25,03 ppm |
| Anhydride citraconique 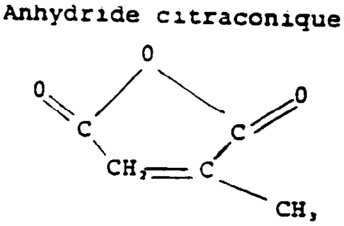 | $30.10^{-5}$ M<br>33,62 ppm |
| Anhydride itaconique 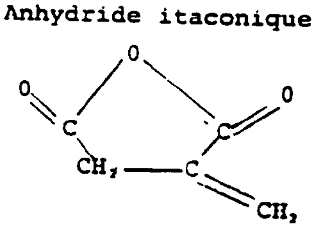 | $60.10^{-5}$ M<br>67,25 ppm |

La figure 1 annexée montre la selectivité de ces composés vis-à-vis des larves des nématodes phytophages parasites des racines.

Cette figure comprend en abscisse la concentration d'acide maléique en mg/l (ppm) et en mM/l, et en ordonnée le % de paralysie des nématodes testés, qui sont énumérés ci-après :

Phytophages :

| | | |
|---|---|---|
| ■ | Heterodera sp. | (parasites de racines ) |
| ▣ | Meloïdogyne sp. | ( " " ) |
| ▥ | Pratylenchus penetrans | ( " " ) |
| ☐ | Radopholus similis | ( " " ) |
| ▨ | Helicotylenchus multicinctus | ( " " ) |
| ⊡ | Xiphinema index | ( " " ) |
| | Aphelenchoïdes besseyi | (parasite de feuilles, tiges, champignons) |
| | Ditylenchus dipsaci | (parasite de tiges et bulbes) |
| | Bursaphelenchus xilophilus | (parasite des parties aériennes du pin) |

Mycophages

Ditylenchus myceliophagus
Aphelenchus sp.

Saprophages

Aphelenchoïdes saprophilus
Coenorhabditis sp.
Cephalobus sp.
Turbatrix aceti

Entomophages

Steinernema sp. ( = Neoaplectana sp.)

Parasites d'animaux

Paralihostrongylus sp. (parasite du porc-épic)

Des tests ont également été réalisés, avec certaines des molécules nématicides précitées, dans des pots contenant :

- 1,5 kg de sol (mélange sable + argile) stérile à 13 % d'humidité (pH du sol = 7,7) ;
- une plantule de tomate St Pierre (variété sensible à Meloïdogyne) agée de 30 jours.

Ces pots étaient traités avec 6 doses des molécules (doses calculées en fonction de la quantité d'eau contenue dans chaque pot et de la quantité d'eau apportée avec la molécule) et infestés 6 heures après traitement avec 400 jeunes larves infestantes de 24 heures ($L_2$) de Meloïdogyne arenaria par pot.

Quinze (15) jours après, les racines de tomates infestées étaient lavées et colorées au Lactophénol Bleu Cotton (LBC) afin de dénombrer le nombre de $L_2$ ayant pénétré dans les racines par rapport à des témoins non traités.

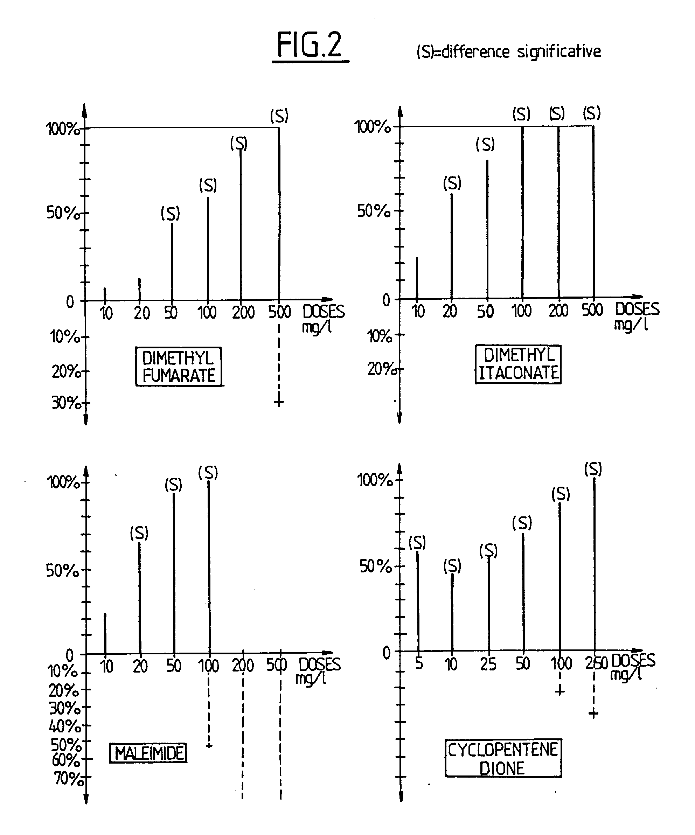

La figure 2 annexée montre l'efficacité de 4 molécules testées en pots dans ces conditions. Cette figure

comprend en abscisse la concentration de chaque molécule en mg/l d'eau totale (contenue dans le pot) et en ordonnées :

↑ : l'efficacité de la molécule représentée par le % de réduction du nombre de $L_2$ ayant pénétré par rapport au témoin non traité ;

↓ : l'effet phytotaxique de la molécule exprimé en % de réduction du chevelu racinaire par rapport au témoin non traité.

Il ressort de ce qui précède que les composés nématicides conformes à l'invention agissent sélectivement exclusivement sur les nématodes phytoparasites des racines - qui, en fait, sont ceux qui causent les plus graves dégâts en agriculture - sans porter atteinte aux espèces saprophages constituant la microfaune utile du sol, ni aux espèces mycophages, ni aux espèces phytophages parasites des parties aériennes des plantes. De plus les composés conformes à l'invention agissent à des doses très faibles - moins de 100 ppm - qui ne détruisent pas l'équilibre biologique des sols traités, alors que les doses importantes (200-300 ppm) préconisées dans l'Art antérieur tuent de nombreux organismes de l'environnement qu'il n'est pas souhaitable de détruire, détruisant ainsi l'équilibre biologique des sols traités.

## Revendications

1. Utilisation de dérivés de diacides carboxyliques caractérisés en ce qu'ils répondent à la formule générale I ci-après :

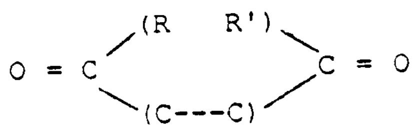

(I)

dans laquelle :

R et R' représentent chacun un groupe $OCH_3$
ou R représente un groupe OH et R' un groupe $OCH_3$
ou R représente un groupe OH et R' un groupe $OC_2H_5$
ou (R R') représente un groupe $CR_1R_2$
ou un groupe $NR_1$
ou un atome d'oxygène

$R_1$ et $R_2$, qui peuvent être identiques ou différents, représentent chacun un atome d'hydrogène ou un groupe méthyle

(C---C) représente un groupe $CR_1=CR_2$
ou un groupe $CR_1R_2\text{-}C=CR_1R_2$
ou un groupe $(CR_1R_2)n$ où
n = 0, 1, 2 ou 3

et où $R_1$ et $R_2$ ont la même signification que ci-dessus, comme nématicides spécifiques, sélectifs vis-à-vis des nématodes phytoparasites des racines des plantes.

2. Utilisation selon la Revendication 1, caractérisée en ce que les composés utilisés répondent à la formule la ci-après :

$$ROC - (C\text{---}C) - COR' \qquad (Ia)$$

dans laquelle :

R et R' représentent chacun un groupe $OCH_3$
ou R représente un groupe OH et R' un groupe $OCH_3$
ou R représente un groupe OH et R' un groupe $OC_2H_5$
(C---C) $R_1$ et $R_2$ ont la même signification que ci-dessus.

3. Utilisation selon la revendication 1, caractérisée en ce que les composés utilisés répondent à la formule Ib ci-après :

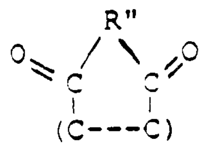

(Ib)

dans laquelle :

R" représente un groue $CR_1R_2$ ou $NR_1$
ou un atome d'oxygène

(C---C) représente un groupe $CR_1=CR_2$
ou $CR_1R_2-C=CR_1R_2$

$R_1$ et $R_2$ ont la même signification que ci-dessus.

## Patentansprüche

1. Verwendung von Dicarbonsäurederivaten, dadurch **gekennzeichnet,** daß sie durch die nachstehende allgemeine Formel I dargestellt sind:

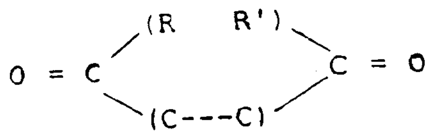

(I)

worin:

R und R' jeweils eine $OCH_3$-Gruppe bedeuten
oder R eine OH-Gruppe und R' eine $OCH_3$-Gruppe bedeuten
oder R eine OH-Gruppe und R' eine $OC_2H_5$-Gruppe bedeuten
oder (R R') ein Rest der Formel $CR_1R_2$
oder ein Rest der Formel $NR_1$
oder ein Sauerstoffatom bedeuten,

$R_1$ und $R_2$, die gleich oder verschieden sein können, jeweils ein Wasserstoffatom oder eine Methylgruppe bedeuten, und

(C---C) ein Rest der Formel $CR_1=CR_2$
oder ein Rest der Formel $CR_1R_2-C=CR_1R_2$
oder ein Rest der Formel $(CR_1R_2)n$ mit
n = 0, 1, 2 oder 3 bedeutet,

wobei $R_1$ und $R_2$ wie vorstehend definiert sind, als gegen phytoparasitäre Nematoden von Pflanzenwurzeln selektive spezifische Nematizide.

2. Verwendung nach Anspruch 1, dadurch **gekennzeichnet,** daß die verwendeten Verbindungen durch die nachstehende Formel Ia dargestellt sind:

ROC - (C---C)- COR' (Ia)

worin R und R' jeweils eine $OCH_3$-Gruppe bedeuten
oder R eine OH-Gruppe und R' eine $OCH_3$-Gruppe bedeuten
oder R eine OH-Gruppe und R' eine $OC_2H_5$-Gruppe bedeuten, und
(C---C), $R_1$ und $R_2$ wie vorstehend definiert sind.

3. Verwendung nach Anspruch 1, dadurch **gekennzeichnet,** daß die verwendeten Verbindungen durch die nachstehende Formel Ib dargestellt sind:

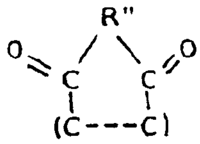

(Ib)

worin:
R" ein Rest der Formel $CR_1R_2$ oder $NR_1$ oder ein Sauerstoffatom bedeutet,
(C---C) ein Rest der Formel $CR_1{=}CR_2$ oder $CR_1R_2\text{-}C{=}CR_1R_2$ bedeutet, und
$R_1$ und $R_2$ wie vorstehend definiert sind.

## Claims

1. Use of dicarboxylic acid derivatives, characterized in that they have general formula I below:

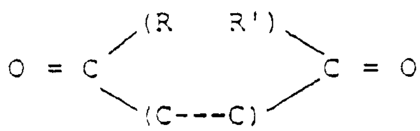

(I)

in which:
R and R' are each a group $OCH_3$, or R is a group OH and R' is a group $OCH_3$, or R is a group OH and R' is a group $OC_2H_5$, or (R R') is a group $CR_1R_2$, a group $NR_1$ or an oxygen atom, where $R_1$ and $R_2$, which can be identical or different, are each a hydrogen atom or a methyl group, and (C---C) is a group $CR_1{=}CR_2$, a group $CR_1R_2\text{-}C{=}CR_1R_2$ or a group $(CR_1R_2)_n$, where n = 0, 1, 2 or 3 and $R_1$ and $R_2$ are as defined above,
as specific nematicides which are selective towards phytoparasitic nematodes of plant roots.

2. Use according to Claim 1, characterized in that the compounds used have formula Ia below:

$$ROC\text{-}(C\text{---}C)\text{-}COR' \quad (Ia)$$

in which:
R and R' are each a group $OCH_3$, or R is a group OH and R' is a group $OCH_3$, or R is a group OH and R' is a group $OC_2H_5$, and (C---C), $R_1$ and $R_2$ are as defined above.

3. Use according to Claim 1, characterized in that the compounds used have formula Ib below:

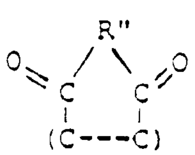

(Ib)

in which:
R" is a group $CR_1R_2$ or $NR_1$ or an oxygen atom,
(C---C) is a group $CR_1{=}CR_2$ or $CR_1R_2\text{-}C{=}CR_1R_2$, and
$R_1$and $R_2$ are as defined above.

FIG.1

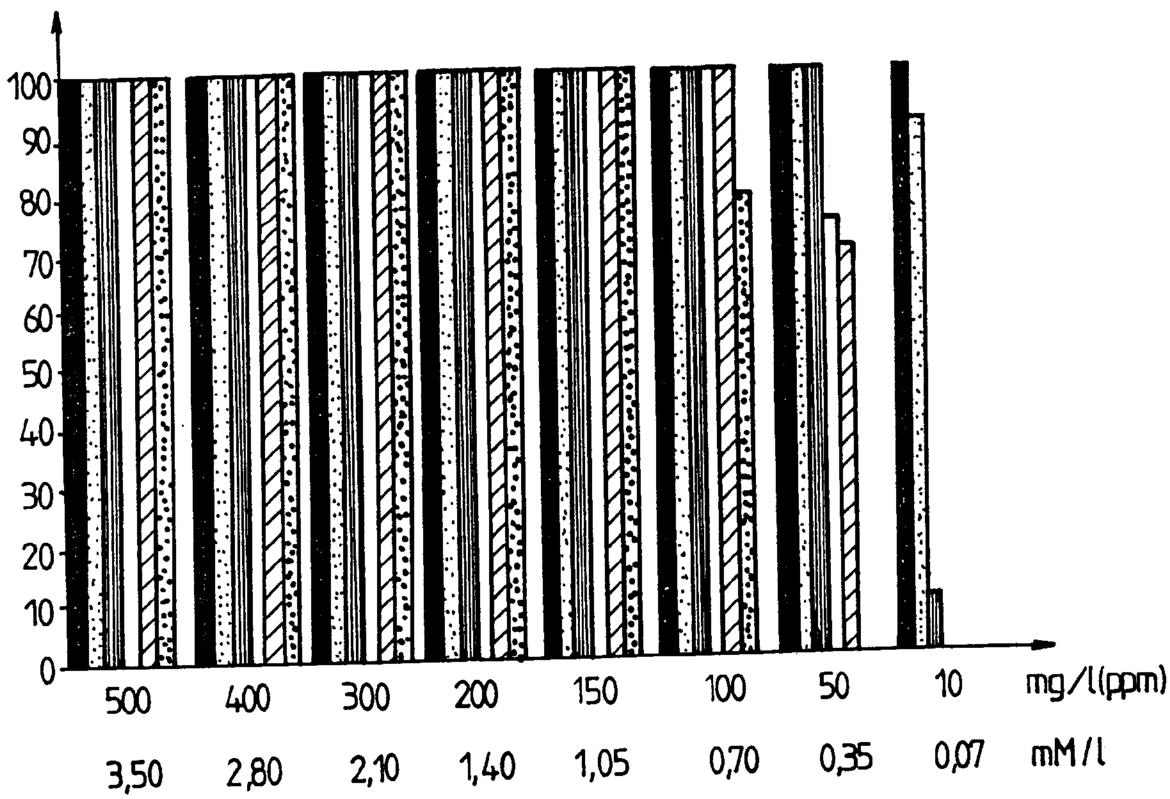
100
90
80
70
60
50
40
30
20
10
0
500
400
300
200
150
100
50
10
mg/l(ppm)
3,50
2,80
2,10
1,40
1,05
0,70
0,35
0,07
mM/l

FIG.2

(S)=difference significative